# EUROPEAN PATENT APPLICATION

(11) **EP 0 942 262 A2**
(43) Date of publication of application: **15.09.1999**
(21) Application number: 99300946.3
(22) Date of filing: 09.02.1999
(51) Int. Cl.: G01C 21/00

(54) **Navigation system**

(30) Priority: 13.03.1998 GB 9805473
(71) Applicant: Marconi Electronic Systems Limited, Stanmore, Middlesex HA7 4LY (GB)
(72) Inventor: Jordan, Derek Ron Dr., Rochester, Kent ME1 2TW (GB); Chapman, Gary, Maidstone, Kent ME15 8 OQ (GB)
(74) Representative: Hoste, Colin Francis

(57) **Abstract**

A receiver (11) receives a signal representative of terrain culture features in a linear manner along a flight path of an aircraft and a processor (12, 13) samples the signal and detects terrain culture features. The processor (12, 13) accesses boundary information stored in a database (14) according to each detected terrain culture feature and locates a navigational fix for the aircraft by successive combination of accessed boundary information until a most probable navigational fix position is located.

## Description

This invention relates to improvements in or relating to navigational systems, in particular to a navigational fix generator and a method of generating a navigational fix.

A variety of navigation aids are widely used to assist airliners during approach and landing. These aids include Inertial Reference Systems (IRS), radio navigation aids such as Instrument Landing Systems (ILS), and satellite-based systems such as the Global Positioning System (GPS).

The capabilities of these existing systems are such that automatic landings can be performed at a wide range of airports and under a wide range of operating conditions. There are, however, many airports where the availability, accuracy, and integrity of the currently available navigation systems are such that automatic landings cannot be performed under the full range of visibility conditions.

It is an object of the present invention to obviate or mitigate the problems associated with the prior art.

According to a first aspect of the present invention a navigational fix generator comprises a receiver operably arranged to receive a signal representative of terrain culture features in a linear manner along a flight path of an aircraft, a processor operably arranged to sample the signal and to detect terrain culture features, a database operably arranged to store boundary information of an area to be overflown by the aircraft, and the processor is operably arranged to access boundary information in accordance with detected terrain culture features and to locate a navigational fix for the aircraft by successive combination of accessed boundary information until a most probable navigational fix position is located.

In this manner detected terrain culture features cause the processor to access stored boundary information and by successive combination of boundary information accessed along the flight path a most probable navigational fix can be located.

Preferably, the signal is an electro-magnetic signal.

The receiver may be operably arranged to receive the electro-magnetic signal from substantially directly below the aircraft.

The receiver may be operably arranged to only receive the electro-magnetic signal from terrain culture features. In this manner reflections of signals such as those naturally transmitted by the sun or upwards transmissions from terrain culture features such as infra red emissions from the terrain are utilised by the navigational fix generator in a passive configuration.

A transmitter may be carried by the aircraft and may be operably arranged to generate a signal and the receiver may be operably arranged to receive an electro-magnetic signal reflected by terrain culture features. The transmitter may be operably arranged to generate an optical signal and the receiver may be operably arranged to receive an optical signal reflected by terrain culture features. Alternatively, the transmitter and receiver may comprise a radar altimeter operably arranged to generate a radar signal and to receive a radar signal reflected by terrain culture features. In this manner signals transmitted by a suitable source carried by the aircraft and reflected by terrain culture features are utilised by the navigational fix generator in an active configuration.

The accessed boundary information may include a current best known position of the aircraft. In this manner the accessed boundary information can be limited to an area containing the best known position of the aircraft, thereby limiting the processing required to a local map area.

The processor may be operable in real time to access boundary information in accordance with detected terrain culture features and to locate the navigational fix for the aircraft by successive combination of the accessed boundary information until a most probable fix position is located.

A memory may be operable to store time information when terrain culture features are detected and the processor may be operable at a later time to access boundary information in accordance with stored time information and to locate the navigational fix for the aircraft by successive combination of the accessed boundary information until a most probable fix position is located.

The most probable fix position may be used to update the current best known position of the aircraft.

The processor may be arranged to detect the presence of boundaries in terrain culture features, or the processor may be arranged to detect the absence of boundaries in terrain culture features, or alternatively the processor may be arranged to detect both the presence and the absence of boundaries in terrain culture features.

According to another aspect of the present invention a method of generating a navigational fix, comprises receiving a signal representative of terrain culture features in a linear manner along the flight path of an aircraft, sampling the signal and detecting terrain culture features, accessing stored boundary information according to detected terrain culture features, and locating a navigational fix for the aircraft by successively combining accessed boundary information until a most probable fix position is located.

A terrain culture feature is defined as a long term landmark distinguishable from an aerial position which has a different reflectivity or transmissivity coefficient to terrain immediately surrounding it. Examples of terrain culture features may be fences, roads, ditches, power lines, rail tracks etc.

The invention will now be described, by way of example only, with reference to the accompanying drawings, in which:
Figure 1 is a schematic diagram of a navigational fix generator;
Figure 2 illustrates an aircraft flight path over terrain and a continuous signal corresponding to terrain culture features;
Figure 3 illustrates the detection of terrain culture features;
Figure 4 illustrates detection of terrain culture features and local map extraction;
Figures 5a to 5c illustrates example stored terrain culture features on local maps accessed;
Figure 6 illustrates combination of local maps in Figures 5a and 5b;
Figure 7 illustrates combination of local maps in Figures 5a to 5c, and
Figure 8 illustrates generation of a position fix.

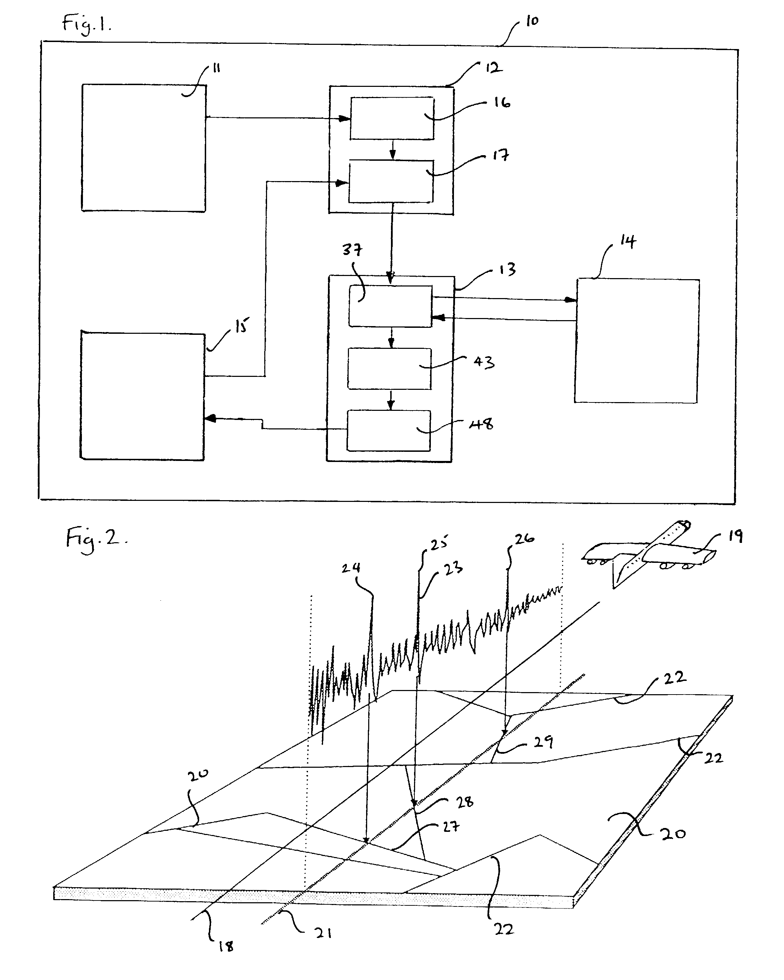

In Figure 1 there is shown a navigational fix generator 10 which comprises a receiver 11 operably connected to a pre-processor 12 that is further operably connected to a processor 13 which is operably connected to a database 14 of stored boundary information previously collected for an area to be overflown by the aircraft. A navigational instrument 15 is operably connected to both the pre-processor 12 and processor 13.

The receiver 11 is arranged to receive an electro-magnetic signal representative of actual terrain culture features along a flight path of an aircraft. The receiver 11 can either be arranged to receive an electro-magnetic signal reflected from terrain culture features that has been actively emitted by a suitable transmitter carried by the aircraft, or the receiver 11 can be arranged to passively receive an electro-magnetic signal emanating from terrain culture features.

The received electro-magnetic signal is passed to the pre-processor 12 which is used to distinguish actual terrain culture features from background noise. The pre-processor 12 comprises a sampler 16 for sampling the incoming electro-magnetic signal and a detector 17 for detecting the presence of a terrain culture feature in the sampled electro-magnetic signal. The detection of a terrain culture feature is termed an event. When an event is detected the detector 17 also determines the best estimate aircraft position from the navigational instrument 15 and passes the results to the processor 13. The operation of the sampler 16 and detector 17 is further described below.

On detection of an event the processor 13 is signalled by the detector 17 and accordingly accesses the database 14 to extract the boundary information of the area overflown by the aircraft for a circular area centred about the best estimate aircraft position provided by the navigational instrument 15 through the detector 17. The operation of the processor 13 and the extraction of data 14 from the database is further described below.

In Figure 2 there is illustrated the flight path 18 of an aircraft 19 over an area of terrain 20 and the flight track 21 of the aircraft on the terrain 20. It will be noted that from the view of the navigational fix generator 10 the area of terrain 20 below the aircraft 19 only contains terrain culture features 22 and does not appear to have variations in terrain height. However, variations in height above the terrain can be used to determine the expected received electro-magnetic signal which can differ according to height above the terrain.

Since the receiver 11 is arranged to sense an electro-magnetic signal representative of terrain culture features, as the aircraft 19 continues along flight path 18 a continuous signal 23 is received at the receiver 11, which corresponds to an electro-magnetic signal from the terrain culture features 22 below the aircraft, i.e. terrain culture features 22 which intersect the flight track 21. Rapid and significant changes in the electro-magnetic signal correspond to terrain culture features 22 directly below the aircraft 19. It can be seen from Figure 2 that peaks 24, 25 and 26 in the continuous signal 23 correspond to terrain culture features 27, 28 and 29 along the flight track 21. It should be noted that, to provide clarity in the illustration, Figure 2 is only an example and does not include all the terrain culture features 22 along the flight track 21 As an alternative the receiver 11 can be arranged to only receive an electro-magnetic signal at specific periods in time rather than continuously thereby allowing the processor 13 and receiver 11 to be used for other tasks.

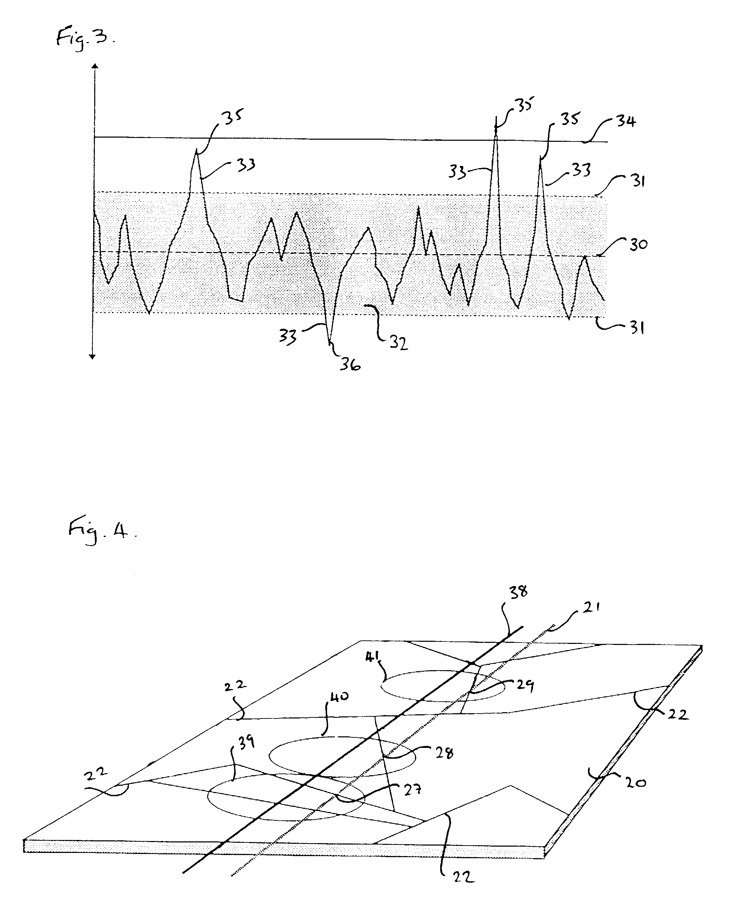

Figure 3 shows a portion of the continuous signal 23 illustrated in Figure 2 in greater detail with the signal 23 expanded along the abscissa which represents time. In the present example the sampler 16 is required to sample electro-magnetic signals at a rate of 50Hz to ensure that a wide range of terrain culture features 22 are detected. Assuming an aircraft 19 has a ground speed of 100 metres per second, a 50Hz sampling rate would result in two metre intervals between sampled signal values. A reduced sampling rate would increase the interval commensurately and the narrower terrain culture features 22, such as ditches, may be missed.

Before an event can be detected, the incoming signal is sampled by sampler 16 and processing is carried out on signal values within a set of fifty samples, i.e. a one second, sliding window. Within this window, the mean 30 and standard deviation of the fifty values are calculated.

It is assumed that all signal values within three standard deviations 31 of the mean 30 are noise 32, i.e. less than one sample in fifty represents the transition resulting from a terrain culture feature 22. Hence, the detector only examines signal excursions 33 of greater than three standard deviations 31 beyond the mean 30.

An event is considered to be detected whenever a signal excursion 33 of more than a predefined decibel threshold 34 above the three standard deviations 31 is measured For example the threshold 34 can be two decibels.

In this example only positive excursions 35 above the noise 32 are considered This is because the vast majority of the events will be caused by a low-high-low transition in the electro-magnetic signal such as that caused by a road running through a field. High-low-high transitions in the electro-magnetic signals, i.e. negative excursions 36, are possible but may be caused by features which do not contribute to navigational fixing such as dry areas within a water logged field.

In Figure 4 there is shown the flight track 21 of an aircraft on an area of terrain 20 which intersects terrain culture features 22 at points 27, 28 and 29. Referring to Figure 1, each time an event is detected, boundary information is extracted from the database 14 by an extractor 37 in the processor 13 for a circular area, for example 256 metres in radius, centred about the best estimate of the aircraft position provided by the navigational instrument 15 through the detector 17. The circular area comprises a local map which contains boundary information on terrain culture features. A best estimate flight track 38 is illustrated in Figure 4 and runs through the centres of circular areas 39, 40 and 41 to indicate how the centre of the extracted boundary information relates to the actual flight position along flight track 21 at the time of the event which triggered the boundary information extraction from the database 14.

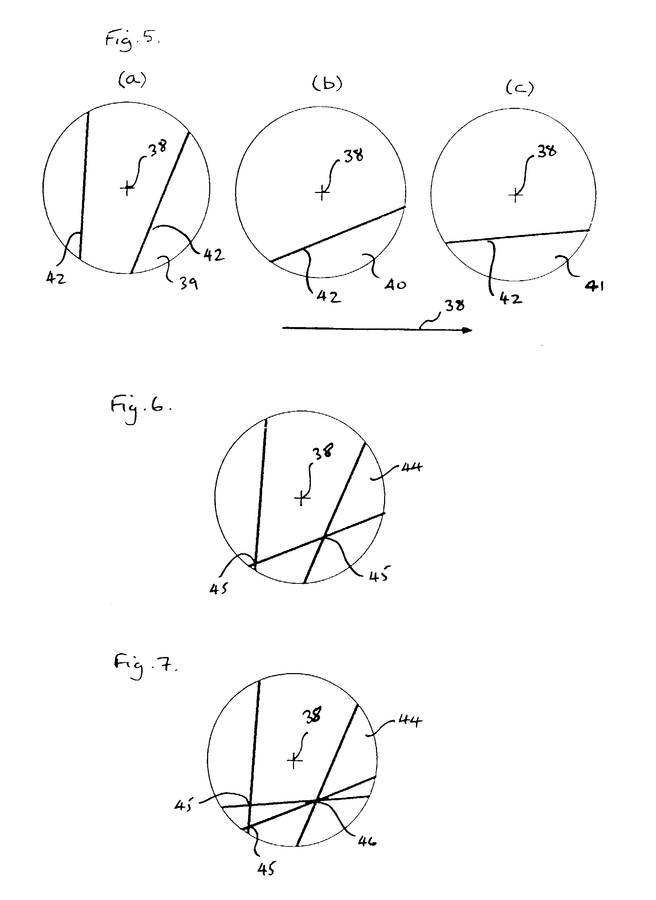

Figures 5a to c illustrate the circular areas 39, 40 and 41 of extracted boundary information along the best estimate flight track 38 and boundaries 42 within the circular areas 39, 40, 41. Each circular area 39, 40, 41 can be regarded as a grid of pixel locations relative to the best estimate flight track 38 of the aircraft which is indicated at the centre of each circular area 39, 40, 41. From Figure 1, the processor 13 further comprises a combiner 43 which is operably arranged to combine each circular area 39, 40, 41 to create a combined likelihood surface 44 of the probable location ofthe aircraft 19. This is achieved by assigning each pixel location within the grid with a likelihood of the true position of the aircraft 19 being at that location. For an individual local map circular area 39, the locations corresponding to boundaries 42 have the highest likelihood, i.e. probability = 1, of one of these locations being the actual location of the aircraft 19, and locations not corresponding to boundaries 42 have the lowest likelihood, i.e. probability = 0.

From Figure 6, the process of combining a series of individual circular areas 39, 40 is demonstrated to create a combined likelihood surface 44 of the probable location of the aircraft 19. Figure 6 shows the combination of the circular areas of 39, 40 in Figures 5a and 5b. The two points 45 where the boundaries 42 intersect represent the highest likelihood, i.e. probability = 2 ÷ 2 = 1, of one of those points 45 being the actual position of the aircraft 19. All other locations on the boundaries 42 have the next likelihood, i.e. probability = 1 ÷ 2 = 0.5, while all other locations not corresponding to boundaries 42 have the lowest likelihood, i.e. probability = 0.

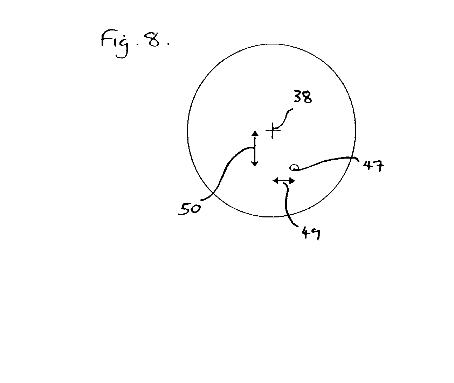

In Figure 7, the circular areas 39, 40, 41 of Figure 5a to c have been combined to construct a combined likelihood surface 44. The point 46 where three boundaries 42 intersect represents the highest likelihood, i.e. probability = 3 ÷ 3 = 1, of that point 46 being the actual position of the aircraft 19. Those points 45 where two boundaries intersect represent the next highest likelihood, i.e. probability = 2 ÷ 3 = 0.66. All other locations on the boundaries 42 have the next highest likelihood, i.e. probability = 1 ÷ 3 = 0.33. All other locations not corresponding to boundaries 42 have the lowest likelihood, i.e. probability = 0.

Locations containing the highest likelihood values are referred to as peaks. The more circular areas 39, 40, 41 that are combined, the more refined the distribution of likelihood becomes, until eventually a single location can be selected as the most likely position of the aircraft 19.

Referring to figure 8, a position fix 47 is generated by a fix acceptor 48 which forms part of the processor 13, in Figure 1, after sufficient circular areas 39, 40, 41 have been combined to produce a single peak of position likelihood within the combined likelihood surface 44. A position fix 47 can be represented as a correction to the best estimate position of the aircraft 19 provided by the navigational instrument 15 through the detector 17 by taking the difference, along the abscissa 49 and along the ordinate 50.

Final acceptance for determining when a peak is suitable for producing a position fix can be decided using a set of fix acceptance criteria, for example:
there are no subsidiary peaks which could equal the value of the present highest peak as a result of combining one further circular area, and
the magnitude of the highest peak is commensurate with the number of detected events which have contributed to the formation of the highest peak.

Once a suitable peak has passed the fix acceptance criteria, the correction values for the abscissa 49 and ordinate 50 are measured by the fix acceptor 48 and supplied to the navigation instrument 15 to update the current best estimate position of the aircraft 19.

Following the generation of a position fix 47 the cycle of combining local maps can begin again, based on the updated best estimate position of the aircraft 19, to determine a further position fix 47.

Alternatively, a memory device could be arranged to store the time an event was detected for release to the processor 13 at a later point in time. The extractor 37 would then use time along the best estimate flight track 38 to access boundary information from the database 14 and to locate a position fix 47 as described above.

It will be understood from the preceding description that the pre-processor 12 and the processor 13 can be combined to form a single processing unit.

It will also be understood that the navigational fix generator 10 may be either passive or active in nature. That is to say that the receiver 11 of the generator 10 may be operably arranged to receive an electro-magnetic signal from terrain culture features such that reflections of an electro-magnetic signal transmitted naturally, for example, by the sun or transmission upwards from terrain culture features e.g. infrared emissions, are utilised without the need of a transmitter. In this configuration the generator 10 is passive. However, a suitable transmitter can be carried by the aircraft 19 which is operably arranged to transmit an electro-magnetic signal to terrain culture features for reflection back to the receiver 11. In this configuration the generator 10 is active and a suitable transmitter may transmit optical signals to be received by a receiver 11 operably arranged to receive such reflected optical signals from terrain culture features. Alternatively, the transmitter and receiver may comprise a radio altimeter which is operably arranged to generate a radar signal that is reflected by terrain culture features back to the receiver 11. In this manner the radar altimeter is used to measure returned signal strength as a measure of the reflectivity of an area of terrain 20 under the flight path 18 of an aircraft 19.

The above described technique obtains a position fix from the presence of terrain culture features, such as fences, roads and ditches. But by only detecting the presence of terrain culture features full potential of available terrain culture information is not utilised. Just as a position fix can be determined from the presence of a terrain culture feature when an event is detected, so it can also be determined from the absence of a terrain culture feature when no event is detected. That is to make use of the absence of terrain culture features, such as fields between terrain culture features.

In order to obtain a position fix from the absence of terrain culture features, detection is assumed when no terrain culture features have been detected, an occurrence referred to as a non-event. Each location on the combined likelihood surface which forms part of a boundary will not be one of the possible locations of the aircraft. Therefore, the position likelihood for each location on the combined likelihood surface which corresponds to a boundary will need to be reduced.

Another technique of providing a position fix from the absence of terrain culture features can be summarised as follows:
if an event is detected the probability of all locations on the combined likelihood surface which correspond to a boundary is incremented, or
if a non-event is detected, the probability of all locations on the combined likelihood surface which correspond to a boundary is decremented.

However, there are two further considerations. Firstly, by decrementing locations on the combined likelihood surface, certain locations will eventually become negative In order to avoid this complication, the technique can be altered such that all locations not corresponding to boundaries are incremented following a non-event. This has the same relative effect as decrementing all the boundary locations.

Secondly, given the proportion of terrain samples which result in the detection of an event to those which result in a non-event, there will clearly be more non-events than events. Hence, the effect on the combined likelihood surface must be weighted in favour of events. In practice, this means that the probability of locations not corresponding to a boundary is incremented by an amount which is proportionally less than that used to increment the probability of locations corresponding to a boundary. The proportion is related to the overall ratio of events to non-events.

Given these considerations, an enhanced technique can be summarised as follows:
if an event is detected, the probability of all locations on the combined likelihood surface which correspond to a boundary is incremented by a value n, where n can be any value, but is typically 1, and
if a non-event is detected, the probability of all locations on the combined likelihood surface which do not correspond to a boundary is incremented by a value n/r, where r is the ratio of non-events to events, e.g. r:1.

## Claims

1. A navigational fix generator, comprising
a receiver operably arranged to receive a signal representative of terrain culture features in a linear manner along a flight path of an aircraft,
a processor operably arranged to sample the signal and to detect terrain culture features,
a database operably arranged to store boundary information of an area to be overflown by the aircraft, and
the processor is operably arranged to access boundary information in accordance with detected terrain culture features and to locate a navigational fix for the aircraft by successive combination of accessed boundary information until a most probable navigational fix position is located.

2. A navigational fix generator, as in Claim 1, wherein the signal is an electro-magnetic signal.

3. A navigational fix generator, as in Claim 2, wherein the receiver is operably arranged to receive the electro-magnetic signal from substantially directly below the aircraft.

4. A navigational fix generator, as in Claims 2 or 3, wherein the receiver is operably arranged to only receive the electro-magnetic from terrain culture features.

5. A navigational fix generator, as in Claims 2 or 3, wherein a transmitter carried by the aircraft is operably arranged to generate an electro-magnetic signal and the receiver is operably arranged to receive an electro-magnetic signal reflected by terrain culture features.

6. A navigational fix generator, as in Claim 5, wherein the transmitter is operably arranged to generate an optical signal and the receiver is operably arranged to receive an optical signal reflected by terrain culture features.

7. A navigational fix generator, as in Claim 5, wherein transmitter and receiver comprise a radar altimeter operably arranged to generate a radar signal and to receive a radar signal reflected by terrain culture features.

8. A navigational fix generator, as in any preceding claim, wherein the accessed boundary information includes a current best known position of the aircraft.

9. A navigational fix generator, as in Claim 8, wherein the processor is operable in real time to access boundary information in accordance with detected terrain culture features and to locate the navigational fix for the aircraft by successive combination of the accessed boundary information until a most probable fix position is located.

10. A navigational fix generator, as in Claim 8, wherein a memory is operable to store time information when terrain culture features are detected and the processor is operable at a later time to access boundary information in accordance with stored time information and to locate the navigational fix for the aircraft by successive combination of the accessed boundary information until a most probable fix position is located.

11. A navigational fix generator, as in Claims 9 or 10, wherein the most probable fix position is used to update the current best known position of the aircraft.

12. A navigational fix generator, as in any preceding claim, wherein the processor is arranged to detect the presences of boundaries in terrain culture features.

13. A navigational fix generator, as in any of Claims 1 to 11, wherein the processor is arranged to detect the absence of boundaries in terrain culture features.

14. A navigational fix generator, as in Claims 12 or 13, wherein the processor is arranged to detect both the presence and absence of boundaries in terrain culture features.

15. A navigational fix generator substantially as described with reference to the accompanying drawings.

16. A method of generating a navigational fix, comprising
receiving a signal representative of terrain culture features in a linear manner along the flight path of an aircraft,
sampling the signal and detecting terrain culture features,
accessing stored boundary information according to detected terrain culture features, and
locating a navigational fix for the aircraft by successively combining accessed boundary information until a most probable fix position is located.

17. A method of generating a navigational fix substantially as described with reference to the accompanying drawings.
